Europäisches Patentamt

European Patent Office

Office européen des brevets

(11) Publication number: **0 438 657 A2**

# EUROPEAN PATENT APPLICATION

(21) Application number: 90122088.9

(51) Int. Cl.5: **B60R 11/02**

(22) Date of filing: 19.11.90

(30) Priority: 24.01.90 IT 1241090

(43) Date of publication of application:
**31.07.91 Bulletin 91/31**

(84) Designated Contracting States:
**AT BE CH DE DK ES FR GB GR LI LU NL SE**

(71) Applicant: **P.M.M. S.r.l.**
**Via Vittorio Veneto 114**
**I-16042 Carasco (GE)(IT)**

(72) Inventor: **Pastore, Paolo**
**Via V. Veneto 114**
**I-16042 Carasco (GE)(IT)**

(74) Representative: **Porsia, Attilio, Dr. et al**
**c/o Succ. Ing. Fischetti & Weber Via Caffaro**
**3/2**
**I-16124 Genova(IT)**

(54) Housing provided with a closing door for the concealed accomodation of a car radio.

(57) The subject of the invention is a housing provided with a closing door for the concealed accommodation of a car radio. Said housing (1) is open on its front side, which faces towards the interior of the passenger compartment, and is provided with means of closing (5) of said front opening as well as with means (2) for the alternative movement of the car radio (A) in relation to the housing (1) into a retracted position and into an advanced position in relation to said front opening. According to the invention, element of control (9) of the means of closing (5) of the front opening of the housing (1) are provided, which simultaneously constitute the element of control (9) of the means of movement (2) of the car radio (A) into retracted and advanced position in relation to the housing (1) itself.

Fig.1

EP 0 438 657 A2

The present invention relates to car radios, and more specifically a housing intended to be mounted permanently in a space in the dashboard of a motor vehicle and capable of accommodating inside it a car radio, which housing is open on its front side, which faces towards the interior of the passenger compartment, and is provided with means of closing of said front opening as well as with means for the alternative movement of the car radio in relation to the housing into a retracted position and into an advanced position in relation to said front opening of the housing.

The aim of the invention is to produce a housing of the type described in the introduction which, in addition to being of simple and economical design as well as extremely reliable and trouble-free as far as its functioning is concerned, has an extremely reduced space requirement, in particular of dimensions slightly greater than those of the car radio itself, allowing its easy and rapid mounting.

The invention solves this problem with a housing of the type described in the introduction, in which the control element of the means of closing of the front opening of the housing simultaneously constitute the element of control of the means of movement of the car radio into retracted and advanced position in relation to the housing itself, said element of control and the means of transmission of the control movement of the means of closing of the front opening and of the means of movement of the car radio being interposed between one horizontal side of the car radio and the associated horizontal side of the housing.

The element of control can be operated manually or by means of a small motor.

Preferably, the means of closing are constituted by a door which is mounted slidably in lateral guides in the two directions in relation to the front opening, the guides being designed in an angled manner in the area of the front opening, as a result of which, in the opening position, the door is arranged parallel to the upper side of the housing while, in the position of closing of the housing, it is moved angularly into a vertical position and closes the front opening towards the outside.

The means of movement of the car radio inside the housing are constituted by a support slide of the car radio, which is guided slidably in the two directions in relation to the front opening of the housing itself.

The element of control of the means of closing and of the means of movement of the car radio is constituted by a slider which is fixed in a slidable manner in the two directions in relation to the front opening and articulated on the rear side of the closing door, as well as on the support slide of the car radio. The means of transmission of the control movement are made in such a manner that the closing position of the door corresponds to the retracted position of the support slide, while the opening position of the door corresponds to the advanced position of the support slide.

The advantages of the present invention are clear from what has been explained above and consist essentially in the considerable reduction in the space requirement volume, in particular as far as the length of the housing is concerned. This makes it possible to mount the housing easily in any type of motor vehicle dashboard, even with depths which are relatively reduced, without having to have recourse to operations for modifying the dashboards.

Furthermore, the extreme simplicity of design considerably reduces the costs of production and ensures reliable functioning and considerable robustness of the housing itself.

Further characteristics of the invention and the advantages deriving from these will emerge with greater clarity from the following description of an exemplary embodiment which is illustrated in the drawings, in which:

Figs 1 and 2 illustrate a vertical cross-section through the housing according to the invention, in the open and closed state respectively;

Figs 3 and 4 illustrate a view from above, partially in cross-section, of the housing according to Fig. 2 and Fig. 1 respectively.

According to the figures, the housing is constituted by a rectangular box 1 which is open in the area of two opposite front sides. In the box 1, a support slide 2 is accommodated in a slidable manner in the two directions in relation to the open front sides. Preferably, the support slide 2 is provided on its lower side with sliding feet 3 which are made of a material with a low coefficient of friction in relation to the bottom of the box 1, on which they rest, in particular of suitable plastic material. The car radio A is fixed in a permanent manner to the support slide 2, for example by means of screws or similar (not illustrated).

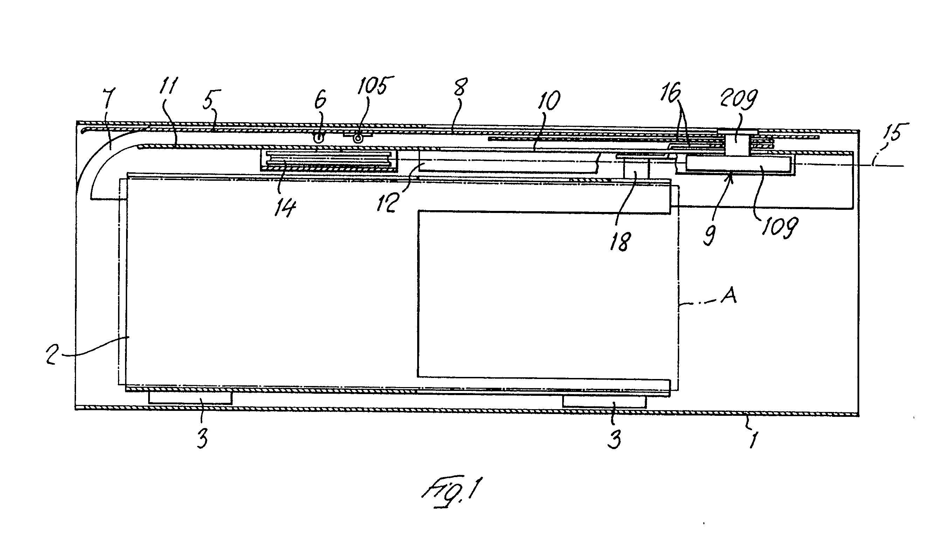

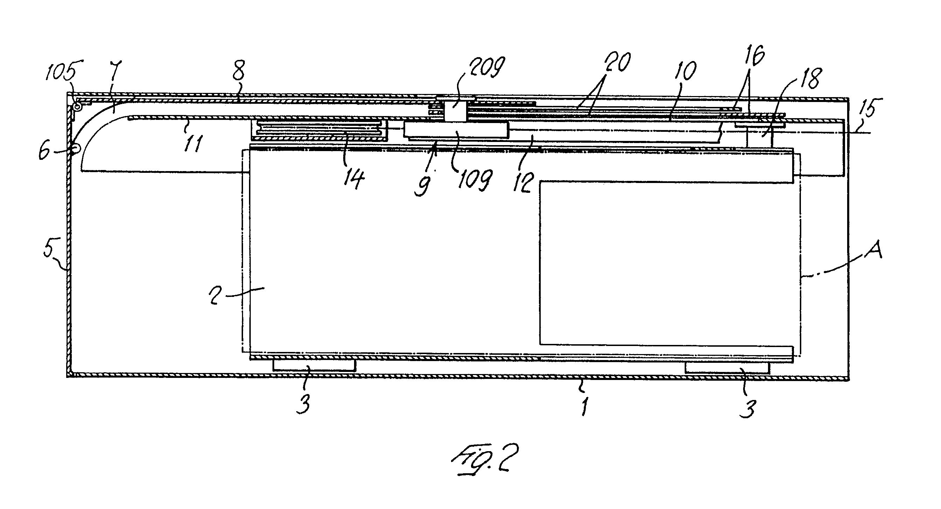

Between the upper side of the support slide 2 and the upper side of the box 1, a door 5 for closing that front side of the box 1 facing towards the interior of the passenger compartment of the motor vehicle, or associated with the front side of the car radio A, is guided in a slidable manner in the two directions in relation to the open sides of the box 1. The door 5 is of dimensions which correspond essentially to the front opening of the box 1. In the region of its rear side, on both its opposite lateral edges, the door 5 is provided with a small projecting pin 6 which engages in a curved guide groove 7. The curved groove 7 is provided on the respective internal side of the box 1 in the upper region in the area of the front opening. Its terminal ends are aligned respectively with the upper side and with the front side of the box 1. Upon sliding of the door 5, in the direction of the associated front opening, from its opening position (Fig. 1), in which it is completely retracted inside the box 1 and is parallel to the upper side of the same, into the position of closing of the front opening (Fig. 2), it is turned over into a position parallel to the front side of the box 1 and vice-versa.

The rear side of the door 5 is connected by means of a hinge 105 to a plate 8. The plate 8 extends over the entire length of the box 1 and is fixed by means of its rear side to a control slider 9. The control slider 9 is supported in a slidable manner in the two directions in relation to the open front sides of the box 1 in an oblong slot 10 of a support plate 11. The support plate 11 is interposed between the upper side of the slide 2 and the upper side of the box 1, separating the door 5 from the support slide 2. On its lower side, the support plate 11 has two parallel guide tongues 12 oriented in the direction of the oblong slot 10 and between which a shoe 109 of the slider 9 engages. The shoe 109 of the slider 9 is fixed to a drive cable 15 (illustrated in dot-dash lines). The drive cable 15 is returned around a pulley 14 fixed in a rotary manner on the lower side of the support plate 11 and is operationally connected to, for example, a motorized pulley which is not illustrated. Consequently, the slider 9 acts as a pusher for the door 5 in the direction of closing of the box 1 and as a pulling element for the same in the direction of opening of the box 1.

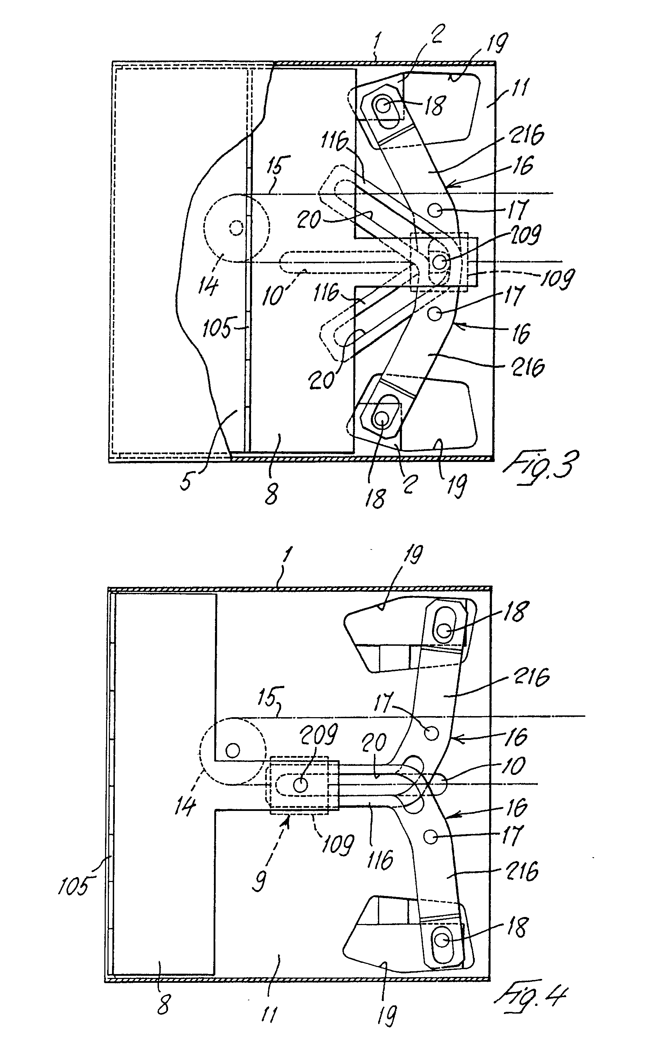

The slider 9 simultaneously constitutes the element of control for the movement, in the two directions in relation to the front opening of the box 1, of the support slide 2. The slider 9 projects above the support plate 11 with a pin 209. On the upper side of the support plate 11, two angled levers 16 (Figs 3 and 4) are articulated at 17 in an oscillating manner parallel to the same. In the position of closing of the box 1, the two angled levers 16 are superposed in relation to one another with one of their arms 116, while the opposite arms 216 are spread apart in relation to one another in the manner of a T or of a Y. The ends of those arms 216 of the angled levers 16 which are spread apart in relation to one another are articulated at 18 on the support slide 2 through slots 19 of the support plate 11. Those arms 116 of the angled levers 16 which are superposed in relation to one another are aligned parallel to the oblong slot 10 and are superposed on the same. These are each provided with an oblong aperture 20. In this position, the oblong apertures 20 of the arms 116 are coincident in relation to one another and with the oblong slot 10 of the support plate 11, and the pin 209 of the slider 9 extends through these. The oblong apertures 20 of the arms 116 of the angled levers 16 extend, correspondingly angled also in the area of the angled region of the angled levers 16, and intersect one another. The oblong slot 10 of the support plate 11 extends beyond said region of intersection of the apertures 20 (Fig. 4).

As can be seen from Figs 3 and 4, when the slider 9 is moved in a direction away from the front opening of the box 1, it slides freely in the oblong apertures 20 of the superposed arms 116 of the levers 16 and in the oblong slot 10, bringing about the pulling of the door 5 in the direction of opening. When the slider 9 arrives in the region of intersection of the oblong apertures 20 of the two angled levers 16, the pin 209 of the same brings about the oscillation of the angled levers 16 in the direction of a further spreading apart of those arms 216 of the same which are spread apart in relation to one another which, since they are articulated on the support slide 2, push this latter towards the front opening (Fig. 3).

During the movement in the opposite direction, the slider 9 initially pulls the angled levers 16 into the position of superposition of the arms 116 again, bringing the support slide 2 into the retracted position, and subsequently in the remaining length of its travel brings about the sliding of the door 5 towards the front opening and the consequent closing of the same.

The housing for accommodation according to the invention can be made of any material, preferably of metal material. By virtue of the particular embodiment, in addition to the considerable saving in length in the space requirement, it has a simple and economical design which guarantees its robustness and at the same time its efficient and reliable functioning.

The present invention is of course not limited to the embodiment illustrated and described but includes all those alternatives and modifications falling within the broader scope of the inventive idea, and essentially as claimed below.

## Claims

1. Housing provided with a closing door for the concealed accommodation of a car radio, which housing (1) is open on its front side, which faces towards the interior of the passenger compartment, and is provided with means of closing (5) of said front opening as well as with means (2) for the alternative movement of the car radio (A) in relation to the housing (1) into a retracted position and into an advanced position in relation to said front opening of the housing, characterized in that element of control (9) of the means of closing (5) of the front opening of the housing (1) are provided, which simultaneously constitute the element of control (9) of the means of movement (2) of the car radio (A) into retracted and advanced position in relation to the housing (1) itself.

2. Housing according to Claim 1, characterized in that the element of control (9) and means of transmission (8, 16) of the control movement to the means of closing (5) of the front opening and to the means of movement (2) of the car radio (A) are interposed between one horizontal side of the car radio (A) and the associated horizontal side of the housing (1).

3. Housing according to Claim 1 or 2, characterized in that the element of control (9) are constituted by a slider which is mounted slidably in the two directions in relation to the front opening of the housing (1) on a support plate (11) fixed to the inside of the housing (1) in its upper region.

4. Housing according to Claim 4, characterized in that the means of closing (5) of the front opening are constituted by a door which has dimensions corresponding to the opening itself and which is mounted slidably in the direction of said front opening in the upper space of the housing (1) comprised between the upper side of the same and the support plate (11) of the slider (9).

5. Housing according to Claim 4, characterized in that the rear side of the door (5) is connected by means of a hinge (105) to a slidable connecting plate (8) which is fixed to the slider (9) and preferably has a width which corresponds essentially to the internal width of the housing (1), while, in its rear region, the door (5) is provided on each side with a pin (6) which projects outwards laterally and which engages in a curved guide groove (7) provided in the respective internal lateral wall of the housing, in the upper region and in the area of the front opening, the terminal branches of the curved groove (7) being aligned respectively with the upper side of the housing (1) and with the vertical lateral edge of the front opening.

6. Housing according to one or more of the preceding claims, characterized in that the means of movement of the car radio (A) into retracted position and into advanced position inside the housing (1) are constituted by a support slide (2) which is provided with means of fixing the car radio (A) and which is mounted slidably, in the two directions in relation to the front opening, by virtue of sliding feet (3) made of material with a low coefficient of friction, preferably of a plastic material, interposed between the lower side of the support slide (2) and of the housing (1).

7. Housing according to Claim 6, characterized in that the means of transmission (16) of the control movement of the support slide (2) are operationally connected to the slider (9) and are supported on the upper side of the support plate (11) in such a manner that a movement of the support slide (2) into retracted position corresponds to the movement of closing of the front opening of the housing (1), and a movement of advance of the support slide (2) towards the front opening corresponds to the movement of opening of the same.

8. Housing according to Claim 7, characterized in that the slider (9) engages with a pin (209) in an oblong slot (10) of the support plate (11), which is oriented in the direction of the front opening, while, on the support plate (11), two angled levers (16) are articulated symmetrically in relation to said oblong slot (10), one of the arms (116) of which interacts with the slider (9) while the other arm (216) of each angled lever (16) is articulated through an associated slot (19) on the support slide (2).

9. Housing according to Claim 8, characterized in that the arm (116) of each angled lever (16) has an aperture (20) which extends, correspondingly angled, as far as the angle region of the respective lever (16) and in which the pin (209) of the slider (9) engages, while the levers (16) are arranged in such a manner that, in the position of closing of the housing (1), the arms (116) of each lever (16) are superposed in relation to one another and are oriented in the direction of sliding of the slider (9), and the apertures (20) are coincident with the oblong slot (10) and intersect one another in the area of their angled region, while the arms (216), which are articulated on the support slide (2), are arranged spread apart in relation to one another in the manner of a T or of a Y.

10. Housing according to Claim 9, characterized in that the oblong slot (10) of the support plate (11) has an extension beyond the angle region of the angled levers (16), as a result of which the continuation of the travel of the slider (9) in the direction of said extension brings about the further spreading apart of those arms (216) of the angled levers (16) which are spread apart and the movement of the support slide (2) in the direction of the front opening of the housing (1), while the movement of the slider (9) in the opposite direction brings about a drawing together again of those arms (216) of the angled levers (16) which are spread apart and the movement of the support slide (2) into retracted position.

11. Housing according to one or more of the preceding claims, characterized in that the control element (9) is operated by means of a motor, the slider (9) being provided with a fixing shoe (109) which is guided on the lower side of the support plate (11), for example by a drive cable (15) which is returned preferably around a motorized pulley and around an idle pulley (14) which is supported in a rotary manner on the lower side of the support plate (11).

Fig.1

EP 0 438 657 A2

Fig.2

Fig.3

Fig.4